# EUROPÄISCHE PATENTSCHRIFT

(11) **EP 1 426 301 B1**
(45) Veröffentlichungstag und Bekanntmachung des Hinweises auf die Patenterteilung: **21.10.2009**
(21) Anmeldenummer: 03027807.1
(22) Anmeldetag: 03.12.2003
(51) Int. Cl.: B65D 35/10, B65D 75/00, B65D 75/58

(54) **Schlauchförmiger, insbesondere dosenförmiger, Behälter zur Aufnahme von Fluiden**
Tubular bag for liquids
Sachet tubulaire pour liquides

(30) Priorität: 06.12.2002 DE 10257145
(43) Veröffentlichungstag der Anmeldung: 09.06.2004
(73) Patentinhaber: Huhtamaki Ronsberg Zweigniederlassung der Huhtamaki Deutschland GmbH & Co. KG., 87671 Ronsberg/Allgäu (DE)
(72) Erfinder: Michalsky, Andreas, 87700 Memmingen (DE)
(74) Vertreter: Popp, Eugen

(56) Entgegenhaltungen:
- EP-A- 1 362 797
- WO-A-00/49908
- WO-A-00/50314
- DE-U- 1 757 066
- DE-U- 9 107 722
- DE-U- 29 920 874
- US-A- 6 050 451
- US-A1- 2001 042 757
- US-B1- 6 270 867
- PATENT ABSTRACTS OF JAPAN vol. 2000, no. 04, 31. August 2000 (2000-08-31) -& JP 2000 006999 A (FUJI SEAL INC), 11. Januar 2000 (2000-01-11)

## Beschreibung

Die Erfindung betrifft einen schlauchförmigen, insbesondere dosenförmigen, Behälter zur Aufnahme von Fluiden gemäß dem Oberbegriff des Patentanspruches 1.

Aus dem Stand der Technik sind eine Vielzahl schlauchförmiger Behälter bekannt. Diese dienen in aller Regel der Aufnahme von Pasten, Cremes, Gelen und Flüssigkeiten. Die schlauchförmigen Behälter sind zumeist tubenförmig, in neuerer Zeit aber auch dosenförmig gestaltet. So beschreiben die DE 32 08 625 A1 sowie DE 44 29 148 A1 Verfahren zum Herstellen und Befüllen von Tuben. Die JP 2001 080 650 A beschreibt einen beutelförmigen Behälter mit einem Boden. Ein dosenförmiger schlauchförmiger Behälter ist beispielsweise in der WO 99/64227 beschrieben. Eine Reihe weiterer dosenförmiger schlauchförmiger Behälter sind den Druckschriften EP 0 595 587 B1, EP 0 833 774 B1, WO 00/00396 sowie der FI 109 193 B zu entnehmen.

All diese in den vorgenannten Druckschriften beschriebenen schlauchförmigen Behälter weisen jedoch, insbesondere hinsichtlich ihrer Verwendung, Nachteile auf. Eine Verwendung ist deshalb nur eingeschränkt und nur für ausgewählte Produkte möglich. So eignen sich Schlauchbeutelverpackungen und insbesondere Tuben nur sehr begrenzt bzw. gar nicht zur Aufnahme von Flüssigkeiten. Darüber hinaus weisen Tuben keinen Boden auf, der als Standfläche dienen kann. Ein weiterer wesentlicher Nachteil, der allen vorgenannten schlauchförmigen Behältern gemeinsam ist, besteht darin, daß die genannten Behälter zur Aufnahme und insbesondere Lagerung und Transport sowie zur gezielten dosierten Freigabe von Getränken, insbesondere carbonisierten Getränken, nicht geeignet sind.

Bisher wurden für diesen Zweck in aller Regel Flaschen und Dosen aus Aluminium oder Weißblech eingesetzt. Diese weisen zwar eine hohe Dichtigkeit, insbesondere Druckdichtigkeit, und damit auch die Möglichkeit zur Lagerung von unter einem Überdruck stehenden Fluiden auf. Sie sind jedoch sowohl teuer in der Herstellung als auch nachteilig hinsichtlich ihres Gewichts und ihrer Entsorgung.

Aus der WO 00/50314 A ist ein schlauchförmiger Behälter zur Aufnahme von Fluiden mit einem schlauchförmigen Körper und einem an diesen angesetzten Boden- und Deckelteil bekannt, wobei das Bodenteil einen Randbereich aufweist, der im wesentlichen parallel zu einem unteren Rand des schlauchförmigen Körpers verläuft und mit dem unteren Rand des schlauchförmigen Körpers versiegelt ist. Im Querschnitt ist der bekannte Behälter ovalförmig. Darüber hinaus ist das Bodenteil flexibel ausgebildet. Dementsprechend ist die Stabilität des bekannten Behälters allenfalls für relativ dickflüssige Pasten od. dgl. ausreichend. Zur Aufnahme von Flüssigkeiten, insbesondere Getränken eignet sich die bekannte Konstruktion nicht.

Ähnlich verhält es sich bei dem Behälter gemäß der US 6,270,867 B1, der zwar ein relativ dickwandiges Deckelteil aufweist, um eine ausreichende Stabilität des Behälters zu gewährleisten. Diese Maßnahme ist jedoch sehr aufwendig. Darüber hinaus sind keine zusätzlichen Maßnahmen für eine Verstärkung des Verbindungsabschnitts zwischen Deckelteil und schlauchförmigem Körper vorgesehen.

Ausgehend von dem genannten Stand der Technik liegt der vorliegenden Erfindung die Aufgabe zugrunde, einen schlauchförmigen Behälter der eingangs genannten Art zur Verfügung zu stellen, der geeignet ist, auch unter einem leichten Überdruck stehende Flüssigkeiten, wie beispielsweise carbonisierte Getränke aufzunehmen und stabil zu lagern.

Diese Aufgabe wird durch die kennzeichnenden Merkmale des Anspruches 1 gelöst. Durch die verstärkte Ausbildung des Verbindungsabschnitts zwischen schulterförmigem Deckelteil und schlauchförmigem Körper einerseits und durch das formstabile Bodenteil andererseits erhält der Behälter eine überraschend hohe Formstabilität, so daß er auch zur Aufnahme von Getränken od. dgl. geeignet ist, selbst wenn diese unter leichtem Überdruck stehen. Insbesondere ist es auch nicht erforderlich, das Deckelteil besonders stabil bzw. dickwandig auszuführen, um die erforderliche Stabilität, insbesondere auch Formstabilität unter Druck zu erhalten.

Die Verschlußvorrichtung ist vorzugsweise wiederverschließbar ausgebildet, so daß es möglich ist, lediglich Teilmengen der Füllmenge aus dem schlauchförmigen Behälter zu entnehmen und diesen anschließend, nach einer Entnahme, wiederzuverschließen. Die Verschlußvorrichtung ist vorzugsweise so ausgebildet, daß ein gegebenenfalls vorhandener Überdruck langsam und geregelt abgebaut werden kann, beispielsweise mittels eines Drehverschlusses.

Gemäß einer Ausführungsform der Erfindung ist das schulterförmige Deckelteil zumindest teilweise, insbesondere schulterförmig, von einem oberen Rand des schlauchförmigen Körpers umschlossen und mit diesem versiegelt. Diese Ausführungsform bringt den maßgeblichen Vorteil mit sich, daß ein in dem schlauchförmigen Behälter vorhandener oder sich entwickelnder Überdruck zur Stabilisierung von Siegelnähten in einem Schulterbereich beiträgt. Der Überdruck wirkt hierbei auf die innere Oberfläche des schulterförmigen Deckelteils und preßt das Deckelteil gegen den das schulterförmige Deckelteil umgebenden oberen Rand des schlauchförmigen Körpers. Der schlauchförmige Körper ist vorzugsweise aus einem flexiblen Material gefertigt. Dieses weist jedoch eine immanente Festigkeit, gegebenenfalls unter Heranziehung einer Gewebsoder Metall- oder dergleichen Einlage, auf, so daß eine Schulter des Deckelteils gegen eine Schulter des schlauchförmigen Körpers gepreßt wird. Eine in diesem Bereich vorhandene Siegelung zwischen dem Deckelteil und dem schlauchförmigen Körper wird demgemäß durch die zusätzliche Ausübung eines Innendrucks in dem schlauchförmigen Behälter zusätzlich verstärkt, was eine zusätzliche abdichtende Wirkung zur Folge hat.

Erfindungsgemäß ist das Bodenteil als formstabiles Rundteil ausgebildet und mit einem unteren Rand des schlauchförmigen Körpers versiegelt. Das Bodenteil ist von dem unteren Rand des schlauchförmigen Körpers ringförmig umschlossen und mit diesem versiegelt. Der schlauchförmige Körper weist gemäß einer Ausführungsform eine runde "Standfläche" auf, in die das Bodenteil eingesetzt wird, die hinsichtlich ihrer Form im wesentlichen der Umfangsform des Bodenteils entspricht. Es ist ebenso möglich, daß der schlauchförmige Körper ein- oder mehreckig oder oval ausgebildet ist. In jedem Fall ist die Form des Bodenteils der Form der Standfläche des schlauchförmigen Körpers angepaßt, so daß das Bodenteil in zumindest einen unteren Rand des schlauchförmigen Körpers einsetzbar ist und auf diese Weise den schlauchförmigen Körper nach unten verschließt.

Das Bodenteil weist einen Randbereich auf, der im wesentlichen parallel zu dem unteren Rand des schlauchförmigen Körpers verläuft. Der Randbereich dient als Siegelrand und weist vorzugsweise eine sich senkrecht zum Umfang erstreckende Breite im Bereich von 0,1 mm bis 10 mm, bevorzugt 0,25 mm bis 5 mm und besonders bevorzugt 0,4 mm bis 0,6 mm auf.

Erfindungsgemäß ist der schlauchförmige Körper aus einem zumindest zweischichtigen Laminat hergestellt, das zumindest eine Barriereschicht aufweist. Gemäß einer Ausführungsform der Erfindung ist hierbei die einem Behälterinneren zugewandte Schicht des Laminats als Siegelschicht und eine, im Falle eines zumindest dreischichtigen Laminats, einem Behälteräußeren zugewandte Schicht des Laminats als bedruckbare und/oder siegelbare Schicht ausgebildet. Hierdurch ist es ermöglicht, daß der schlauchförmige Körper dadurch gebildet wird, daß ein anfänglich flächiges Laminat mittels einer Siegelnaht, erfindungsgemäß bevorzugt einer Lap-Seal-Siegelnaht, zu einem schlauchförmigen Körper geschlossen wird.

Gemäß einer Variante der Erfindung ist es vorgesehen, daß der schlauchförmige Körper aus dem flächigen Laminat so gebildet ist, daß, vorzugsweise auf wenigstens einer Seite des schlauchförmigen Körpers, eine Fin-Seal-Siegelnaht ausgebildet ist. Diese Fin-Seal-Siegelnaht kann übergangslos in einen zweiten schlauchförmigen Körper münden, der ebenfalls durch diese gebildet und parallel und neben dem ersten schlauchförmigen Körper angeordnet ist. Auf diese Weise können mehrere nebeneinander angeordnete schlauchförmige Behälter hergestellt werden, die über eine Fin-Seal-Siegelnaht miteinander verbunden sind. Die Fin-Seal-Siegelnaht kann parallel zur Längserstreckung des schlauchförmigen Behälters perforiert sein, so daß ein schlauchförmiger Behälter von dem daneben angeordneten abtrennbar ist. Auf diese Weise kann beispielsweise ein "Sixpack" realisiert sein.

Gemäß einer alternativen Ausführungsform ist der schlauchförmige Körper nahtlos ausgebildet. Dies kann beispielsweise durch eine Extrusion realisiert sein. Die einzelnen Schichten des Laminats werden erfindungsgemäß bevorzugt coextrudiert. In Frage kommen hierbei insbesondere eine Tandem-, one-step- oder eine Triplex-Extrusion.

Die in dem Laminat enthaltene zumindest eine Barriereschicht ist erfindungsgemäß aus einem oder mehreren der nachfolgenden Materialien hergestellt: Polyethylenterephthalat-Siliziumoxid (PET-SiOₓ), gerecktes Polyamid (OPA-SiOₓ), Ethylenvinylalkohol (EVOH), Polyamid (PA), Aluminium, insbesondere Aluminiumfolie.

Die Dicke des Laminats liegt erfindungsgemäß im Bereich von 450 µm bis 800 µm, bevorzugt im Bereich von 250 µm bis 400 µm und besonders bevorzugt im Bereich von 150 µm bis 200 µm.

Das erfindungsgemäße Laminat kann eine oder mehrere Barriereschichten enthalten, die aus denselben Materialien, vorzugsweise jedoch aus unterschiedlichen Materialien hergestellt sind.

Gemäß einer Ausführungsform der Erfindung ist die Verschlußvorrichtung an dem Deckelteil, insbesondere an einem halsförmigen Abschnitt des Deckelteils, mittels Aufstecken, Aufschrauben oder Aufklicken befestigbar. Es ist jedoch ebenso möglich, die Verschlußvorrichtung an dem Deckelteil oder einem halsförmigen Abschnitt davon anzukleben oder mit diesem zu versiegeln. Die jeweils anzuwendende Befestigungsvariante hängt maßgeblich von einer gewünschten Belastbarkeit der Verbindung zwischen Verschlußvorrichtung und Deckelteil sowie gegebenenfalls einer gewünschten Wiederauffüllbarkeit des Behälters ab. So ist es beispielsweise vorteilhaft, eine aufschraubbare Verschlußvorrichtung anzubringen, wenn carbonisierte Getränke in den schlauchförmigen dosenförmigen Behälter abgefüllt und darin aufbewahrt werden, da hiermit einerseits eine gezielte Druckentlastung als auch ein sicherer Verschluß gewährleistet ist.

Gemäß einer weiteren Ausführungsform der Erfindung weist das Bodenteil eine verschließbare und/oder wiederverschließbare Einrichtung auf, mittels derer eine ein- oder mehrmalige Befüllung des Behälters möglich ist. Alternativ hierzu ist eine Befüllung durch das Deckelteil, vorzugsweise bevor die Verschlußvorrichtung an diesem befestigt ist, durchführbar. Eine mehrmalige Befüllung durch das Deckelteil kann durch die geöffnete Verschlußvorrichtung hindurch erfolgen. Alternativ kann eine Verschlußvorrichtung verwendet werden, die reversibel auf das Deckelteil aufsteck-, -schraub- oder - klickbar ist und wieder entfernbar ausgeführt ist.

Weitere Ausführungsformen der Erfindung ergeben sich aus den Unteransprüchen.

Nachfolgend wird die Erfindung anhand eines Ausführungsbeispiels beschrieben, das anhand der Abbildung näher erläutert wird. Hierbei zeigt:

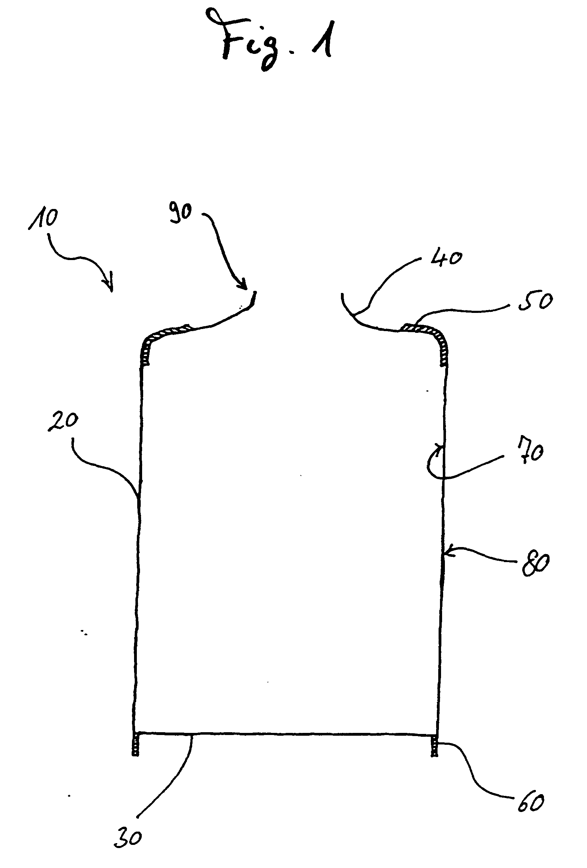

- Fig. 1: eine schematische Darstellung eines erfindungsgemäßen schlauchförmigen Behälters gemäß einer bevorzugten Ausführungsform

In der nachfolgenden Beschreibung werden für gleiche und gleich wirkende Teile dieselben Bezugsziffern verwendet.

Fig. 1 zeigt einen schlauchförmigen Behälter 10. Der schlauchförmige Behälter weist einen schlauchförmigen Körper 20 sowie ein Bodenteil 30 und ein schulterförmiges Deckelteil 40 auf. Der Boden 30 ist in den schlauchförmigen Körper 20 von unten eingeschoben und entlang eines unteren Randes 60 mit dem schlauchförmigen Körper 20 versiegelt. In einem Kopfbereich des schlauchförmigen Körpers 20 befindet sich das schulterförmige Deckelteil 40 mit einem halsförmigen Abschnitt 90. Das schulterförmige Deckelteil 40 ist mit einem oberen Rand 50 des schlauchförmigen Körpers 20 versiegelt. Der obere Rand 50 umschließt das schulterförmige Deckelteil 40 schulterförmig. Der schlauchförmige Körper 20 ist aus einem Laminat hergestellt, das eine Barriereschicht (nicht gezeigt) aufweist. Die dem Behälterinneren zugewandte Schicht des Laminats 70 besteht aus Polyethylen. Die dem Behälteräußeren zugewandte Schicht des Laminat 80 besteht ebenfalls aus diesem Material. Selbiger Schichtaufbau gilt für das Bodenteil und das schulterförmige Deckelteil 40. Auf diese Weise ist gewährleistet, daß die äußeren Schichten des Laminats aus einem siegelfähigen Material bestehen und dadurch bedingt das Bodenteil 30 und das Deckelteil 40 in den schlauchförmigen Körper 20 eingesiegelt werden können. Eine Verschlußvorrichtung (nicht gezeigt) ist an dem halsförmigen Abschnitt 90 des schlauchförmigen Behälters 10 befestigbar.

### Bezugszeichenliste

- 10: schlauchförmiger Behälter
- 20: schlauchförmiger Körper
- 30: Bodenteil
- 40: Deckelteil
- 50: oberer Rand
- 60: unterer Rand
- 70: dem Behälterinneren zugewandte Schicht des Laminats
- 80: dem Behälteräußeren zugewandte Schicht des Laminats
- 90: halsförmiger Abschnitt

## Patentansprüche

1. Schlauchförmiger, Behälter (10) zur Aufnahme von Fluiden, mit einem schlauchförmigen Körper (20) und einem an diesen angesetzten Boden- (30) und Deckelteil (40), wobei das Deckelteil (40) schulterförmig ausgebildet und zur Anbringung einer Verschlußvorrichtung geeignet ist
**dadurch gekennzeichnet, dass**
- das schulterförmige Deckelteil (40) zumindest teilweise, von einem oberen Rand (50) des schlauchförmigen Körpers (20) unter Ausbildung eines im Querschnitt gebogen ausgebildeten und verstärkten Verbindungsabschnitts umschlossen und mit diesem versiegelt ist,
- das Bodenteil (30) als formstabiles Rundteil ausgebildet ist, und
- das Bodenteil (30) einen Randbereich aufweist, der parallel zu einem unteren Rand (60) des schlauchförmigen Körpers (20) verläuft und mit dem unteren Rand (60) des schlauchförmigen Körpers (20) versiegelt, ist.

2. Behälter nach Anspruch 1,
**dadurch gekennzeichnet, dass**
der schlauchförmige Körper (20) aus einem Laminat mit zumindest einer Barriereschicht hergestellt ist.

3. Behälter nach einem der vorhergehenden Ansprüche,
**dadurch gekennzeichnet, dass**
der schlauchförmige Körper (20) eine Lap-Seal-Siegelnaht aufweist.

4. Behälter nach einem der Ansprüche 1 bis 2,
**dadurch gekennzeichnet, dass**
der schlauchförmige Körper (20) nahtlos ist.

5. Behälter nach einem der Ansprüche 2 bis 4,
**dadurch gekennzeichnet, dass**
die Barriereschicht aus einem oder mehreren der nachfolgenden Materialien hergestellt ist: Polyethylenterephthalat-Siliziumoxid (PET-SiOₓ), gerecktes Polyamid (OPA-SiOₓ), Ethylenvinylalkohol (EVOH), Polyamid (PA), Aluminium.

6. Behälter nach einem der Ansprüche 2 bis 5,
**dadurch gekennzeichnet, dass**
eine einem Behälterinneren zugewandte Schicht (70) des Laminat als Siegelschicht und eine einem Behälteräußeren zugewandte Schicht (80) des Laminat als bedruckbare und/oder siegelbare Schicht ausgebildet ist.

7. Behälter nach einem der Ansprüche 2 bis 6,
**dadurch gekennzeichnet, dass**
die Dicke des Laminats im Bereich von 450 µm bis 800 µm, bevorzugt im Bereich von 250 µm bis 400 µm und besonders bevorzugt im Bereich von 150 µm bis 200 µm liegt.

8. Behälter nach einem der vorhergehenden Ansprüche,
**dadurch gekennzeichnet, dass**
die Verschlußvorrichtung an dem Deckelteil (40), an einem halsförmigen Abschnitt (90) mittels Aufstecken, Aufschrauben oder Aufklicken befestigbar ist.

9. Behälter nach einem der vorhergehenden Ansprüche,
**dadurch gekennzeichnet, dass**
das Bodenteil (30) eine verschließbare und/oder wiederverschließbare Einrichtung aufweist, mittels derer eine ein- oder mehrmalige Befüllung des Behälters möglich ist.

## Claims

1. Tubular receptacle (10) for the accommodation of fluids, with a tubular body (20) and a base section (30) and top section (40) attached to this, the top section (40) being in the shape of a shoulder and suitable for attaching a closure device,
**characterised in that**
- the shoulder-shaped top section (40) is at least partially enclosed by an upper edge (50) of the tubular body (20) forming a reinforced connection region of curved cross-section and is sealed therewith,
- the base section (30) is constructed as a dimensionally stable round section, and
- the base section (30) has an edge region, which extends parallel to a lower edge (60) of the tubular body (20) and is sealed with the lower edge (60) of the tubular body (20).

2. Receptacle according to claim 1,
**characterised in that**
the tubular body (20) is manufactured from a laminate having at least one barrier coating.

3. Receptacle according to one of the preceding claims,
**characterised in that**
the tubular body (20) has a lap-seal seam.

4. Receptacle according to one of claims 1 to 2,
**characterised in that**
the tubular body (20) is seamless.

5. Receptacle according to one of claims 2 to 4,
**characterised in that**
the barrier coating is manufactured from one or more of the following materials: polyethylene terephthalate silicon dioxide (PET-SIOₓ), streteched polyamide (OPA-SiOₓ), ethylene vinyl alcohol (EVOH), polyamide (PA), aluminium.

6. Receptacle according to one of claims 2 to 5,
**characterised in that**
a layer (70) of the laminate facing one inner side of the receptacle is constructed as a sealing layer and a layer (80) of the laminate facing one outer side of the receptacle is constructed as a printable and/or sealable layer.

7. Receptacle according to one of claims 2 to 6,
**characterised in that**
the thickness of the laminate is in the range of 450 µm to 800 µm, preferably in the range of 250 µm to 400 µm and especially in the range of 150 µm to 200 µm.

8. Receptacle according to one of the preceding claims,
**characterised in that**
the closure device on the top section (40) is arranged to be fixed to a neck-shaped region (90) by means of mounting, screwing or clicking on.

9. Receptacle according to one of the preceding claims,
**characterised in that**
the base section (30) has a sealable and/or resealable facility, allowing the receptacle to be filled one or more times.

## Revendications

1. Sachet (10) tubulaire destiné à recevoir des fluides, comportant un corps (20) tubulaire et un fond (30) et une partie supérieure (40), attachés audit corps tubulaire, la partie supérieure (40) étant réalisée en forme d'épaulement et étant apte à recevoir un dispositif d'obturation,
**caractérisé en ce que**
- la partie supérieure (40) en forme d'épaulement est entourée au moins partiellement par un bord supérieur (50) du corps (20) tubulaire moyennant la formation d'une partie de jonction renforcée et réalisée avec une section courbe, et est scellée audit bord supérieur,
- le fond (30) est réalisé sous forme de partie ronde à forme stable, et
- ledit fond (30) comporte une zone de bordure qui est parallèle à un bord inférieur (60) du corps (20) tubulaire et qui est scellée au bord inférieur (60) du corps (20) tubulaire.

2. Sachet selon la revendication 1, **caractérisé en ce que** le corps (20) tubulaire est réalisé à partir d'un stratifié avec au moins une couche barrière.

3. Sachet selon l'une quelconque des revendications précédentes, **caractérisé en ce que** le corps (20) tubulaire comporte un joint de scellement de type lap-seal.

4. Sachet selon l'une quelconque des revendications 1 à 2, **caractérisé en ce que** le corps (20) tubulaire est réalisé sans jointure.

5. Sachet selon l'une quelconque des revendications 2 à 4, **caractérisé en ce que** la couche barrière est réalisée dans un ou plusieurs des matériaux suivants : polyéthylène téréphtalate - oxyde de silicium (PET-SiOₓ), polyamide étiré (OPA-SiOₓ), éthylène-alcool vinylique (EVOH), polyamide (PA), aluminium.

6. Sachet selon l'une quelconque des revendications 2 à 5, **caractérisé en ce qu'**une couche (70) du stratifié, orientée vers l'intérieur du sachet, est réalisée sous forme de couche de scellement et une couche (80) du stratifié, orientée vers l'extérieur du sachet, est réalisée sous la forme d'une couche apte à être imprimée et/ou scellée.

7. Sachet selon l'une quelconque des revendications 2 à 6, **caractérisé en ce que** l'épaisseur du stratifié se situe dans la plage de 450 µm à 800 µm, de préférence dans la plage de 250 µm à 400 µm et encore mieux dans la plage de 150 µm à 200 µm.

8. Sachet selon l'une quelconque des revendications précédentes, **caractérisé en ce que** le dispositif d'obturation sur la partie supérieure (40) peut être fixé par emmanchement, vissage ou encliquetage sur une partie (90) en forme de goulot.

9. Sachet selon l'une quelconque des revendications précédentes, **caractérisé en ce que** le fond (30) comporte un dispositif apte à être fermé et/ou refermé, au moyen duquel il est possible de remplir une fois ou plusieurs fois le sachet.
